# FASCICULE DE BREVET EUROPEEN

(11) **EP 4 366 958 B1**
(45) Date de publication et mention de la délivrance du brevet: **25.06.2025**
(21) Numéro de dépôt: 22751773.7
(22) Date de dépôt: 06.07.2022
(51) Int. Cl.: B60C 11/03, B60C 11/12, B60C 11/13, B60C 11/00

(54) **PNEUMATIQUE COMPRENANT DES DECOUPURES TRANSVERSALES HYBRIDES**
REIFEN MIT HYBRIDEN QUEREINSCHNITTEN
TYRE COMPRISING HYBRID TRANSVERSE CUTS

(30) Priorité: 07.07.2021 FR 2107347
(43) Date de publication de la demande: 15.05.2024
(73) Titulaire: COMPAGNIE GENERALE DES ETABLISSEMENTS MICHELIN, 63000 Clermont-Ferrand (FR)
(72) Inventeur: DURAND-GASSELIN, Benoît, 63040 CLERMONT-FERRAND Cedex 9 (FR); FERNANDEZ, Miguel, 63040 CLERMONT-FERRAND Cedex 9 (FR)
(74) Mandataire: M.F.P. Michelin
(86) Numéro de dépôt international: PCT/FR2022/051351
(87) Numéro de publication internationale: WO 2023/281214

(56) Documents cités:
- US-A1- 2013 112 325
- US-B2- 10 449 807
- US-B2- 10 864 775
- US-B2- 9 085 201

## Description

La présente invention concerne un pneumatique pour véhicule de tourisme. Par pneumatique, on entend un bandage destiné à former une cavité en coopérant avec un élément support, par exemple une jante, cette cavité étant apte à être pressurisée à une pression supérieure à la pression atmosphérique. Un pneumatique selon l'invention présente une structure de forme sensiblement toroïdale de révolution autour d'un axe principal du pneumatique.

On connait de l'état de la technique un pneumatique pour véhicule de tourisme vendu sous la marque MICHELIN^{®} dans la gamme PRIMACY 4^{®}. Un tel pneumatique comprend une bande de roulement destinée à entrer en contact avec le sol lors d'un roulage du pneumatique par l'intermédiaire d'une surface de roulement portée par une couche de roulement. Le pneumatique comprend également une couche de support de la couche de roulement, également appelée sous-couche, et agencée radialement à l'intérieur de la couche de roulement.

La bande de roulement comprend des découpures circonférentielles principales présentant une profondeur supérieure ou égale à 50% de la hauteur de sculpture et comprenant des première et deuxième découpures circonférentielles principales axialement extérieures agencées axialement de part et d'autre du plan médian du pneumatique. Les première et deuxième découpures circonférentielles principales axialement extérieures sont les découpures circonférentielles principales axialement les plus extérieures de la bande de roulement.

La bande de roulement comprend des nervures agencées axialement respectivement entre deux découpures circonférentielles principales adjacentes et délimitée axialement par lesdites deux découpures circonférentielles principales adjacentes. Les nervures comprennent notamment une première portion axialement latérale et une deuxième portion axialement latérale agencées respectivement axialement à l'extérieur de la première découpure circonférentielle principale axialement extérieure et de la deuxième découpure circonférentielle principale axialement extérieure.

Chaque première et deuxième portion axialement latérale comprend des découpures transversales comprenant des incisions présentant en fond de découpure, une largeur égale à 0,4 mm et ce sur l'intégralité de la longueur curviligne de chaque incision.

On a remarqué que ce pneumatique présentait, dans certains cas, des arrachements de parties de bande de roulement dans les première et deuxième portions axialement latérales.

On connait par ailleurs des pneumatiques des documents US 9085201 B2, US 10864775 B2, US 2013/112325 A1, US 10449807 B2.

L'invention a pour but de réduire voire de supprimer la présence de ces arrachements sans pénaliser outrancièrement les performances de résistance au roulement et d'adhérence sur sol mouillé.

A cet effet, l'invention a pour objet un pneumatique pour véhicule de tourisme comprenant une bande de roulement destinée à entrer en contact avec le sol lors d'un roulage du pneumatique par l'intermédiaire de la surface de roulement, la bande de roulement comprenant :
- des découpures circonférentielles principales présentant une profondeur supérieure ou égale à 50% de la hauteur de sculpture comprenant des première et deuxième découpures circonférentielles principales axialement extérieures agencées axialement de part et d'autre du plan médian du pneumatique, les première et deuxième découpures circonférentielles principales axialement extérieures étant les découpures circonférentielles principales axialement les plus extérieures de la bande de roulement,
- une première portion axialement latérale agencée axialement à l'extérieur de la première découpure circonférentielle principale axialement extérieure et s'étendant axialement depuis un premier bord axial de la surface de roulement jusqu'à la première découpure circonférentielle principale axialement extérieure,
- une deuxième portion axialement latérale agencée axialement à l'extérieur de la deuxième découpure circonférentielle principale axialement extérieure et s'étendant axialement depuis un deuxième bord axial de la surface de roulement jusqu'à la deuxième découpure circonférentielle principale axialement extérieure,

le pneumatique comprenant une couche de roulement et une couche de support de la couche de roulement, la couche de support étant agencée radialement à l'intérieur de la couche de roulement,
la bande de roulement comprend des découpures transversales dites hybrides ménagées au moins en partie dans au moins une des première et deuxième portions axialement latérales, chaque découpure transversale hybride comprend :
   - une portion axialement intérieure dite fine, présentant en fond de découpure, une largeur allant de 0,2 mm à 0,6 mm, la portion axialement intérieure fine étant la portion axialement la plus intérieure de la découpure transversale hybride dans la au moins une des première et deuxième portions axialement latérales,
   - une portion axialement extérieure dite large, présentant en fond de découpure, une largeur allant de 0,7 mm à 5,0 mm, communiquant avec la portion axialement intérieure fine, agencée axialement à l'extérieur de la portion axialement intérieure fine, la portion axialement extérieure large étant la portion axialement la plus extérieure de la découpure transversale hybride dans la au moins une des première et deuxième portions axialement latérales,
chaque découpure transversale hybride présentant un fond de découpure transversale hybride, l'intégralité du fond de chaque découpure transversale hybride est agencée radialement à l'extérieur d'une interface entre la couche de roulement et la couche de support,
au moins une partie du fond de la portion axialement intérieure fine est agencée à une distance radiale de l'interface strictement supérieure à la distance radiale à laquelle est agencée au moins une partie du fond de la portion axialement extérieure large.

Les inventeurs à l'origine de l'invention ont compris que les arrachements étaient consécutifs au fait que, lors du moulage du pneumatique permettant de ménager les incisions dans les portions axialement latérales, les compositions élastomériques à l'état cru de la ou chaque portion axialement latérale subissaient un poinçonnement par l'élément de moulage, ici une lamelle de moulage, de chaque incision. Les inventeurs ont compris que ce poinçonnement était d'autant plus important que l'incision présentait une largeur faible en fond d'incision et que l'incision présentait une profondeur importante. En effet, plus la lamelle de moulage est fine, plus elle est capable de couper les compositions élastomériques de la ou chaque portion axialement latérale. Si, en plus, cette lamelle de moulage pénètre profondément dans les compositions élastomériques, elle est susceptible de venir poinçonner l'interface entre la couche de roulement et la couche de support ce qui a pour effet de déplacer radialement vers l'extérieur la couche de support. Un tel déplacement radialement vers l'extérieur de la couche de support, notamment sur une portion axialement extérieure des portions axialement latérales provoque, lorsque le pneumatique présente une usure importante, une apparition de l'interface sur la surface de roulement. Or, une telle interface n'étant pas prévue pour être en contact avec le sol de roulage, elle se dégrade rapidement, engendrant les arrachements précédemment mentionnés.

Face à un tel problème, les inventeurs à l'origine de l'invention ont conçu des découpures transversales hybrides dont le fond est agencé radialement à l'extérieur de l'interface entre la couche de roulement et la couche de support de façon à éviter que la découpure transversale hybride ne poinçonne cette interface. En d'autres termes, le fond de chaque découpure transversale hybride ne coupe pas l'interface.

En effet, d'une part, dans l'invention, la partie de la bande de roulement la plus susceptible de présenter les arrachements comporte la portion axialement extérieure large de la découpure transversale hybride. Or, les inventeurs à l'origine de l'invention ont noté que, contrairement au moulage d'une incision, le moulage d'une découpure transversale présentant une largeur supérieure ou égale à 0,7 mm n'engendrait pas de déplacement radialement vers l'extérieur de l'interface par poinçonnement de cette dernière mais un déplacement radialement vers l'intérieur par simple effet de la pression de moulage, ce qui réduit l'apparition de l'interface à la surface du pneumatique et donc des arrachements.

D'autre part, en ayant une partie du fond de la portion axialement intérieure fine agencée radialement plus loin de l'interface qu'une partie du fond de la portion axialement extérieure large, on réduit la possibilité que la portion de l'interface agencée au droit de la portion axialement intérieure fine ne soit poinçonnée par l'élément de moulage de la portion axialement intérieure fine. Ainsi, on réduit le risque de voir apparaitre les arrachements.

La distance radiale entre le fond des portions et l'interface est la distance mesurée selon la direction radiale. La distance d'une partie est la distance mesurée pour chaque point de cette partie. Ainsi, une partie du fond de la portion axialement intérieure fine est agencée radialement plus loin de l'interface qu'une partie du fond de la portion axialement extérieure large si tous les points de cette partie du fond de la portion axialement intérieure fine sont agencés à une distance radiale strictement supérieure à la distance à laquelle sont agencés tous les points de la partie du fond de la portion axialement extérieure large.

Par ailleurs, les découpures transversales hybrides du pneumatique selon l'invention permettent de conserver les performances de résistance au roulement et d'adhérence sur sol mouillé. Les découpures transversales sont dites hybrides en raison de la présence de deux portions, l'une fine et l'autre large.

En effet, la portion fine de chaque découpure transversale hybride étant la portion axialement la plus intérieure de la découpure transversale hybride dans la portion axialement latérale, elle est située dans une portion correspondante de la bande de roulement où la hauteur de la bande de roulement est relativement importante. Or, plus la hauteur de la bande de roulement est importante, plus les effets de Poisson sont importants et plus la résistance au roulement est dégradée par la présence d'une découpure. Grâce à la largeur relativement faible de la portion axialement intérieure fine, on limite les effets de Poisson en permettant une mise en contact des deux faces latérales principales de la portion axialement intérieure fine lors du passage du pneumatique dans l'aire de contact ce qui réduit la résistance au roulement. La portion axialement extérieure large étant la portion axialement la plus extérieure de la découpure transversale hybride dans la portion axialement latérale, elle est située dans une portion de la bande de roulement où la hauteur de la bande de roulement est nécessairement plus faible en raison de la courbure du pneumatique. Les effets de Poisson y sont donc moindres et la résistance au roulement est peu pénalisée par la largeur de la portion axialement extérieure large.

De plus, la portion axialement extérieure large de chaque découpure transversale hybride permet une évacuation efficace de l'eau, et en tout cas, améliorée par rapport à celle du pneumatique de l'état de la technique en raison de la largeur en fond de découpure relativement importante.

La portion axialement intérieure fine peut être assimilée à une incision et la portion axialement extérieure large peut être, dès lors que sa largeur est suffisamment importante, assimilée à une rainure. Une incision est telle que la distance entre les faces latérales principales est appropriée pour permettre la mise en contact au moins partielle des faces latérales principales délimitant ladite incision lors du passage dans l'aire de contact, notamment lorsque le pneumatique est à l'état neuf et dans des conditions usuelles de roulage, comprenant notamment le fait que le pneumatique soit à charge nominale et à pression nominale. Une rainure est telle que la distance entre les faces latérales principales est telle que ces faces latérales principales ne peuvent venir en contact l'une contre l'autre dans des conditions usuelles de roulage, comprenant notamment le fait que le pneumatique soit à charge nominale et à pression nominale.

De façon classique, la surface de roulement est délimitée axialement par les premier et deuxième bords axiaux. On détermine les premier et deuxième bords axiaux de la surface de roulement sur un pneumatique monté sur une jante nominale et gonflé à la pression nominale au sens de la norme de la European Tyre and Rim Technical Organisation ou « ETRTO », 2019. Les premier et deuxième bords axiaux de la surface de roulement sont agencés de part et d'autre du plan médian du pneumatique et formées par des lignes sensiblement parallèles à la direction circonférentielle du pneumatique. Dans le cas d'une frontière évidente entre la surface de roulement et le reste du pneumatique, les premier et deuxième bords axiaux de la surface de roulement sont déterminées simplement. Dans le cas où la surface de roulement est continue avec les surfaces externes des flancs du pneumatique, chaque premier et deuxième bord axial passe, dans chaque plan de coupe méridien, par le point pour lequel l'angle entre la tangente à la surface de roulement et une droite parallèle à la direction axiale passant par ce point est égal à 30°. Lorsqu'il existe sur un plan de coupe méridien, plusieurs points pour lesquels ledit angle est égal en valeur absolue à 30°, on retient le point radialement le plus à l'extérieur.

La couche de support du pneumatique selon l'invention n'est pas destinée à venir en contact du sol lors du roulage du pneumatique lorsque l'usure du pneumatique est inférieure à l'usure correspondante au seuil d'usure réglementaire, seuil d'usure qui est par exemple matérialisé sur le pneumatique par des témoins d'usure réglementaires. En d'autres termes, l'interface entre la couche de roulement et la couche de support est agencée, pour au moins 90% de sa longueur curviligne et de préférence pour 100% de sa longueur curviligne, radialement à l'intérieur d'une surface parallèle à la surface de roulement du pneumatique à l'état neuf et passant par le point le plus radialement externe des témoins d'usure réglementaires. Une telle couche de support est au contact direct de la couche de roulement. La couche de support est agencée radialement à l'intérieur de la couche de roulement et ce sur la totalité de la largeur axiale de la couche de support. La couche de support n'est pas une couche de roulement radialement intérieure à une couche de roulement radialement extérieure.

La couche de roulement peut comprendre une seule composition élastomérique ou plusieurs compositions élastomériques agencées de façon à optimiser d'autres performances du pneumatique, notamment selon des répartitions axiales et radiales optimisées tel que cela est décrit dans WO2015032601, WO2012175444, EP3508354, EP2594413, WO2009124816.

La ou chaque première et deuxième portion axialement latérale de la bande de roulement peut bien entendu comprendre d'autres découpures transversales qui ne présentent pas les caractéristiques d'une découpure transversale hybride ainsi que des découpures circonférentielles présentant une profondeur strictement inférieure à 50% de la hauteur de sculpture.

La profondeur d'une découpure ou d'une portion de découpure est, sur un pneumatique neuf, la distance radiale maximale entre le fond de la découpure ou de la portion et son projeté sur le sol lors du roulage du pneumatique. La valeur maximale des profondeurs des découpures est nommée hauteur de sculpture.

Une découpure ou une portion de découpure présente, sur la surface de roulement, deux dimensions principales caractéristiques : une largeur et une longueur curviligne telles que la longueur curviligne est au moins égale à deux fois la largeur. Une découpure ou une portion de découpure est donc délimitée par au moins deux faces latérales principales déterminant sa longueur curviligne et reliées par un fond, les deux faces latérales principales étant distantes l'une de l'autre d'une distance non nulle, dite largeur de la découpure ou de la portion de découpure.

La largeur d'une découpure ou d'une portion de découpure est, sur un pneumatique neuf, la distance maximale entre les deux faces latérales principales mesurée, par défaut et dans le cas où la découpure ou la portion de découpure ne comprend pas de chanfrein, à une cote radiale confondue avec la surface de roulement, et par défaut et dans le cas où la découpure ou la portion de découpure comprend un chanfrein, à la cote radiale la plus radialement extérieure de la découpure ou de la portion de découpure et radialement intérieure au chanfrein. La largeur est mesurée sensiblement perpendiculairement aux faces latérales principales. S'il est précisé une largeur autre que la largeur par défaut, par exemple une largeur à une cote particulière, la largeur est égale à la distance entre les deux faces latérales principales à la cote particulière du fond de découpure ou de la portion de la découpure. Dans le cas de l'invention, que la découpure transversale hybride soit muni ou pas de chanfrein, la largeur en fond de découpure est égale à la distance entre les deux faces latérales principales mesurée au fond de la portion correspondante de la découpure.

Une découpure ou une portion de découpure peut être transversale ou circonférentielle.

Une découpure transversale est telle que la découpure s'étend selon une direction moyenne formant un angle strictement supérieur à 30°, de préférence supérieur ou égal à 45° avec la direction circonférentielle du pneumatique, c'est-à-dire formant un angle inférieur ou égal à 60°, de préférence strictement inférieur à 45° avec la direction axiale du pneumatique. La direction moyenne est la courbe la plus courte joignant les deux extrémités de la découpure et parallèle à la surface de roulement. Une découpure ou une portion transversale peut être continue, c'est-à-dire ne pas être interrompue par un bloc de sculpture ou une autre découpure de sorte que les deux faces latérales principales déterminant sa longueur sont ininterrompues sur la longueur de la découpure transversale ou de la portion. Une découpure transversale peut également être discontinue, c'est-à-dire interrompue par un ou plusieurs blocs de sculpture et/ou une ou plusieurs découpures de sorte que les deux faces latérales principales déterminant sa longueur sont interrompues par un ou plusieurs blocs de sculpture et/ou une ou plusieurs découpures.

Une découpure circonférentielle est telle que la découpure ou la portion s'étend selon une direction moyenne formant un angle inférieur ou égal à 30°, de préférence inférieur ou égal à 10° avec la direction circonférentielle du pneumatique, c'est-à-dire formant un angle strictement supérieur à 60°, de préférence strictement supérieur à 80° avec la direction axiale du pneumatique. La direction moyenne est la courbe la plus courte joignant les deux extrémités de la découpure et parallèle à la surface de roulement. Dans le cas d'une découpure circonférentielle continue, les deux extrémités sont confondues l'une avec l'autre et sont jointes par une courbe faisant un tour complet du pneumatique. Une découpure circonférentielle peut être continue, c'est-à-dire ne pas être interrompue par un bloc de sculpture ou une autre découpure de sorte que les deux faces latérales principales déterminant sa longueur sont ininterrompues sur l'ensemble d'un tour du pneumatique. Une découpure circonférentielle peut également être discontinue, c'est-à-dire interrompue par un ou plusieurs blocs de sculpture et/ou une ou plusieurs découpures de sorte que les deux faces latérales principales déterminant sa longueur sont interrompues par un ou plusieurs blocs de sculpture et/ou une ou plusieurs découpures sur l'ensemble d'un tour du pneumatique.

Dans le cas d'une découpure transversale ou d'une portion de découpure transversale, les faces latérales sont appelées face d'attaque et face de fuite et chacune munie respectivement d'un bord d'attaque et d'un bord de fuite, le bord d'attaque étant le bord qui, pour une ligne circonférentielle donnée, entre dans l'aire de contact avant le bord de fuite.

Dans des modes de réalisation permettant d'améliorer optionnellement le freinage sur sol sec, la ou chaque découpure transversale hybride est munie de chanfreins. Un chanfrein d'une découpure transversale hybride peut être un chanfrein droit ou un chanfrein arrondi. Un chanfrein droit est formé par une face plane inclinée par rapport à la face d'attaque ou de fuite qu'elle prolonge jusqu'au bord d'attaque ou de fuite délimitant circonférentiellement la découpure transversale hybride. Un chanfrein arrondi est formé par une face courbe se raccordant tangentiellement à la face d'attaque ou de fuite qu'elle prolonge. Un chanfrein d'une découpure transversale hybride est caractérisé par une hauteur et une largeur égale respectivement à la distance radiale et à la distance selon une direction perpendiculaire aux faces d'attaque ou de fuite entre le point commun entre la face d'attaque ou de fuite prolongée par le chanfrein et le bord d'attaque ou de fuite délimitant circonférentiellement la découpure transversale hybride.

Dans certains modes de réalisation permettant d'améliorer optionnellement le freinage sur sol mouillé, au moins une des découpures circonférentielles principales est munie de chanfreins. Un chanfrein d'une découpure circonférentielle peut être un chanfrein droit ou un chanfrein arrondi. Un chanfrein droit est formé par une face plane inclinée par rapport à la face axialement intérieure et extérieure qu'elle prolonge jusqu'au bord axialement intérieur ou extérieur délimitant axialement la découpure circonférentielle. Un chanfrein arrondi est formé par une face courbe se raccordant tangentiellement à la face axialement intérieure ou extérieure qu'elle prolonge. Un chanfrein d'une découpure circonférentielle est caractérisé par une hauteur et une largeur égale respectivement à la distance radiale et à la distance axiale entre le point commun entre la face axialement intérieure ou extérieure prolongée par le chanfrein et le bord axialement intérieur ou extérieur délimitant axialement la découpure circonférentielle.

Le pneumatique selon l'invention présente une forme sensiblement torique autour d'un axe de révolution sensiblement confondu avec l'axe de rotation du pneumatique. Cet axe de révolution définit trois directions classiquement utilisées par l'homme du métier : une direction axiale, une direction circonférentielle et une direction radiale.

Par direction axiale, on entend la direction sensiblement parallèle à l'axe de révolution du pneumatique, c'est-à-dire l'axe de rotation du pneumatique.

Par direction circonférentielle, on entend la direction qui est sensiblement perpendiculaire à la fois à la direction axiale et à un rayon du pneumatique (en d'autres termes, tangente à un cercle dont le centre est sur l'axe de rotation du pneumatique).

Par direction radiale, on entend la direction selon un rayon du pneumatique, c'est-à-dire une direction quelconque coupant l'axe de rotation du pneumatique et sensiblement perpendiculaire à cet axe.

Par plan médian du pneumatique (noté M), on entend le plan perpendiculaire à l'axe de rotation du pneumatique qui est situé à mi-distance axiale des deux bourrelets et passe par le milieu axial de l'armature de sommet.

Par plan circonférentiel équatorial du pneumatique (noté E), on entend, dans un plan de coupe méridien, le plan passant par l'équateur du pneumatique, perpendiculaire au plan médian et à la direction radiale. L'équateur du pneumatique est, dans un plan de coupe méridien (plan perpendiculaire à la direction circonférentielle et parallèle aux directions radiale et axiales) l'axe parallèle à l'axe de rotation du pneumatique et située à équidistance entre le point radialement le plus extérieur de la bande de roulement destiné à être au contact avec le sol et le point radialement le plus intérieur du pneumatique destiné à être en contact avec un support, par exemple une jante, la distance entre ces deux points étant égale à H.

Par plan méridien, on entend un plan parallèle à et contenant l'axe de rotation du pneumatique et perpendiculaire à la direction circonférentielle.

Par radialement intérieur, respectivement radialement extérieur, on entend plus proche de l'axe de rotation du pneumatique, respectivement plus éloigné de l'axe de rotation du pneumatique. Par axialement intérieur, respectivement axialement extérieur, on entend plus proche du plan médian du pneumatique, respectivement plus éloigné du plan médian du pneumatique.

Par bourrelet, on entend la portion du pneumatique destiné à permettre l'accrochage du pneumatique sur un support de montage, par exemple une roue comprenant une jante. Ainsi, chaque bourrelet est notamment destiné à être au contact d'un crochet de la jante permettant son accrochage.

Tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Les pneumatiques sont, dans des modes de réalisation préférés de l'invention, destinés à des véhicule de tourisme tels que définis au sens de la norme de la European Tyre and Rim Technical Organisation ou « ETRTO », 2019. Un tel pneumatique présente une section dans un plan de coupe méridien caractérisée par une hauteur de section H et une largeur de section nominale ou grosseur boudin S au sens de la norme de la European Tyre and Rim Technical Organisation ou « ETRTO », 2019 telles que le rapport H/S, exprimé en pourcentage, est au plus égal à 90, de préférence au plus égal à 80 et plus préférentiellement au plus égal à 70 et est au moins égal à 30, de préférence au moins égal à 40, et la largeur de section nominale S est au moins égale à 115 mm, de préférence au moins égale à 155 mm et plus préférentiellement au moins égale à 175 mm et au plus égal à 385 mm, de préférence au plus égal à 315 mm, plus préférentiellement au plus égal à 285 mm et encore plus préférentiellement au plus égal à 255 mm. En outre le diamètre au crochet D, définissant le diamètre de la jante de montage du pneumatique, est au moins égal à 12 pouces, de préférence au moins égal à 16 pouces et au plus égal à 24 pouces, de préférence au plus égal à 20 pouces.

De façon optionnelle et préférée, chaque découpure circonférentielle principale présente une profondeur supérieure ou égale à 75% et plus préférentiellement à 90% de la hauteur de sculpture.

Dans des modes de réalisation dans lesquels les découpures circonférentielles principales sont relativement profondes et adaptées pour des pneumatiques pour véhicule de tourisme, chaque découpure circonférentielle principale présente une profondeur allant de 4,0 mm à la hauteur de sculpture, de préférence allant de 5,0 mm à la hauteur de sculpture et plus préférentiellement allant de 5,5 mm à la hauteur de sculpture.

Dans des modes de réalisation dans lesquels les découpures circonférentielles principales sont des rainures circonférentielles principales relativement larges et adaptées pour des pneumatiques pour véhicule de tourisme, chaque découpure circonférentielle principale présente une largeur axiale supérieure ou égale à 1,0 mm, de préférence supérieure ou égale à 5,0 mm et plus préférentiellement allant de 5,0 mm à 20,0 mm.

Dans des modes de réalisation optionnels, on pourra également envisager qu'au moins une des première et deuxième portion axialement latérale comprenne au moins une découpure circonférentielle complémentaire présentant une profondeur strictement inférieure à 50%, de la hauteur de sculpture, de préférence inférieure ou égale à 30% de la hauteur de sculpture et plus préférentiellement allant de 10% à 30% de la hauteur de sculpture.

Dans certains modes de réalisation, la portion axialement intérieure fine et la portion axialement extérieure large sont adjacentes. Par adjacente, on entend qu'aucune autre portion n'est axialement intercalée entre les portions axialement intérieure fine et extérieure large.

Dans des modes de réalisation avantageux et optionnels, chaque face latérale principale de la découpure transversale hybride est reliée au fond de la découpure transversale hybride par un congé. Ainsi, grâce à la présence de congés, on réduit la formation de fissures qui sont des précurseurs des arrachements. On réduit donc l'apparition des arrachements. Cette réduction de la formation des fissures est d'autant plus efficace que chaque congé présente un rayon de courbure important.

Dans un mode de réalisation avantageux mais optionnel permettant de réduire encore davantage l'apparition des arrachements, au moins 60%, de préférence au moins 75% de la longueur curviligne de la portion axialement intérieure fine est agencée à une distance radiale de l'interface strictement supérieure à une distance radiale moyenne à laquelle est agencée le fond de la portion axialement extérieure large.

En effet, plus la longueur curviligne de la portion axialement intérieure fine agencée à une distance radiale suffisante de l'interface est importante, plus on réduit le risque d'arrachements. Néanmoins, on permet que le fond de la portion axialement intérieure fine soit ponctuellement très proche de l'interface tout en réduisant quand même le risque d'arrachements.

La longueur curviligne d'une découpure transversale ou d'une portion d'une découpure transversale, qu'elle soit hybride ou non, est la longueur mesurée selon la courbe passant à équidistance des bords d'attaque et de fuite entre les deux extrémités de la découpure transversale ou de la portion.

Dans un mode de réalisation avantageux mais optionnel permettant de réduire autant que possible l'apparition des arrachements, le fond de la portion axialement intérieure fine est agencé à une distance radiale moyenne de l'interface strictement supérieure à la distance radiale moyenne à laquelle est agencée le fond de la portion axialement extérieure large.

La distance radialement moyenne est la moyenne des distances radiales entre l'interface et le fond d'une portion mesurées le long de ladite portion.

Ainsi, dans certains modes de réalisation dans lesquels le fond de la portion axialement intérieure fine est ponctuellement plus proche de l'interface que la portion axialement extérieure large, on réduit quand même le risque d'arrachements.

Dans des modes de réalisation optionnels mais préférés, la distance radiale moyenne entre le fond de la portion axialement extérieure large et l'interface va de 0,3 mm à 1,0 mm, de préférence de 0,4 mm à 0,9 mm.

Dans des modes de réalisation optionnels mais préférés, la distance radiale moyenne entre le fond de la portion axialement intérieure fine et l'interface va de 0,5 mm à 1,5 mm, de préférence de 0,6 mm à 1,2 mm.

Dans un mode de réalisation optionnel, au moins une partie de la portion de l'interface agencée radialement au droit de la portion axialement intérieure fine est agencée radialement à l'extérieur d'au moins une partie de la portion de l'interface agencée radialement au droit de la portion axialement extérieure large.

Encore plus préférentiellement, la portion de l'interface agencée radialement au droit de la portion axialement intérieure fine est agencée radialement à l'extérieur de la portion de l'interface agencée radialement au droit de la portion axialement extérieure large.

Ainsi, on peut avantageusement utiliser une couche de support qui remonte radialement plus haut à proximité de la ou de chaque première et deuxième découpure circonférentielle principale sans craindre d'augmenter le risque d'apparition des arrachements. Une telle couche de support permet d'optimiser les performances du pneumatiques, par exemple sa performance de freinage sur sol mouillé comme cela est expliqué dans la demande déposée sous le numéro PCT/FR2021/050698 ou bien encore sa performance en résistance au roulement.

La portion de l'interface agencée radialement au droit de la portion axialement intérieure fine est la portion de l'interface délimitée par extrémités axiales définies par deux plans circonférentiels perpendiculaires à l'axe de rotation du pneumatique et passant respectivement par les extrémités axiales de la portion axialement intérieure fine. De façon analogue, la portion de l'interface agencée radialement au droit de la portion axialement extérieure large est la portion de l'interface délimitée par extrémités axiales définies par deux plans circonférentiels perpendiculaires à l'axe de rotation du pneumatique et passant respectivement par les extrémités axiales de la portion axialement extérieure large.

De façon optimisée mais optionnelle, la bande de roulement comprend des découpures transversales hybrides ménagées en partie dans chaque première et deuxième portion axialement latérale.

Optionnellement et avantageusement, au moins 50%, de préférence au moins 75% et plus préférentiellement au moins 90% des découpures transversales ménagées au moins en partie dans au moins une des première et deuxième portions axialement latérales, de préférence ménagées au moins en partie dans chaque première et deuxième portion axialement latérale, sont des découpures transversales hybrides.

Ainsi, en réduisant le nombre de découpures transversales autres que les découpures transversales hybrides, on réduit le risque de présence d'arrachements, notamment dans le cas où les découpures transversales autres que les découpures transversales hybrides sont des incisions. On réduit également la résistance au roulement du pneumatique dans le cas où les découpures transversales autres que les découpures transversales hybrides sont des rainures.

Dans des modes de réalisations préférés mais optionnels, la portion axialement intérieure fine présente une longueur curviligne au moins égale à 20% et au plus égale à 75% de la longueur curviligne de la partie de chaque découpure transversale hybride ménagée dans la au moins une des première et deuxième portions axialement latérales.

Plus la longueur curviligne de la portion axialement intérieure fine est grande, plus on réduit de la résistance au roulement. Si la longueur curviligne de la portion axialement intérieure est trop grande, la portion axialement extérieure large n'est pas suffisamment longue pour permettre une évacuation optimale de l'eau.

La bande de roulement étant destinée à entrer en contact avec le sol lors d'un roulage du pneumatique par l'intermédiaire de la surface de roulement, la détermination de la longueur curviligne se fait donc dans la portion de la bande de roulement pertinente et donc limitée à la surface de roulement et donc aux première et deuxième portions axialement latérales.

Optionnellement, de façon à optimiser la résistance au roulement, la largeur de la portion axialement intérieure fine en fond de découpure va de 0,2 mm à 0,5 mm.

Dans des modes de réalisation avantageux adaptés à des pneumatiques pour véhicule de tourisme, la portion axialement intérieure fine présente une profondeur allant de 2,0 mm à 5,5 mm, de préférence allant de 3,0 mm à 5,0 mm.

Optionnellement de façon à optimiser l'évacuation de l'eau, la largeur de la portion axialement extérieure large va en fond de découpure de de 1,0 mm à 5,0 mm, de préférence de 2,0 mm à 4,5 mm.

Dans des modes de réalisation avantageux adaptés à des pneumatiques pour véhicule de tourisme, la portion axialement extérieure large présente une profondeur allant de 2,0 mm à 5,5 mm, de préférence allant de 3,0 mm à 5,0 mm.

Dans des modes de réalisation optionnels permettant de réduire le bruit généré par la sculpture du pneumatique, chaque découpure transversale hybride comprend:
- une portion axialement intérieure dite inclinée ménagée dans au moins une des première et deuxième portions axialement latérales et présentant un angle moyen avec la direction axiale supérieur ou égal à 15°, de préférence à 20°, la portion axialement intérieure inclinée étant la portion axialement la plus intérieure de la découpure transversale hybride dans la au moins une des première et deuxième portions axialement latérales,
- une portion axialement extérieure dite droite ménagée dans au moins une des première et deuxième portions axialement latérales et présentant un angle moyen avec la direction axiale strictement inférieur à l'angle moyen de la portion axialement intérieure inclinée et agencée axialement à l'extérieur de la portion axialement intérieure inclinée, la portion axialement extérieure droite étant la portion axialement la plus extérieure de la découpure transversale hybride dans la au moins une des première et deuxième portions axialement latérales.

En effet, dans la portion de la surface de roulement correspondant à la portion axialement intérieure de la découpure transversale hybride, l'aire de contact est rectiligne. Au contraire, dans la portion de la surface de roulement correspondant à la portion axialement extérieure de la découpure transversale hybride, l'aire de contact est arrondie en raison de la courbure du pneumatique. Ainsi, le bord d'attaque de la portion axialement intérieure inclinée entre progressivement en contact avec le sol, c'est-à-dire sur un intervalle de temps relativement long, en raison de l'angle relativement important et de la rectitude de l'aire de contact dans la portion axialement intérieure inclinée, ce qui limite le bruit par rapport à une découpure qui présenterait un angle moyen avec la direction axiale sensiblement nul et dont l'intégralité du bord d'attaque entrerait au même instant en contact avec le sol. De façon analogue, en raison de l'angle plus faible et de l'arrondissement de l'aire de contact dans la portion axialement extérieure droite, le bord d'attaque entre lui aussi progressivement en contact avec le sol ce qui contribue également à limiter le bruit.

L'angle moyen d'une portion est déterminé en prenant la ligne droite s'étendant entre deux points d'extrémités de la portion, les deux points d'extrémités étant situés aux extrémités de chaque portion, à équidistance des bords d'attaque et de fuite de chaque extrémité de la portion.

Dans certains modes de réalisation, la portion axialement intérieure inclinée et la portion axialement extérieure droite sont adjacentes. Par adjacente, on entend qu'aucune autre portion n'est axialement intercalée entre les portions axialement intérieure inclinée et extérieure droite.

Dans certains modes de réalisation optionnels, l'angle moyen de la portion axialement extérieure droite est strictement inférieur à 25°, de préférence inférieur ou égal à 20° et plus préférentiellement à inférieur ou égal à15°.

De façon optionnelle, la portion axialement intérieure fine comprend au moins une partie de la portion axialement intérieure inclinée, et la portion axialement extérieure large comprend au moins une partie de la portion axialement extérieure droite.

Dans une première configuration des portions axialement intérieure inclinée et extérieure droite, la portion axialement intérieure fine comprend :
- la totalité de la portion axialement intérieure inclinée, et
- une première partie de la portion axialement extérieure droite,
et la portion axialement extérieure large comprend :
- une deuxième partie de la portion axialement extérieure droite.

Dans une deuxième configuration des portions axialement intérieure inclinée et extérieure droite, la portion axialement intérieure fine comprend :
- une première partie de la portion axialement intérieure inclinée,
et la portion axialement extérieure large comprend :
- une deuxième partie de la portion axialement intérieure inclinée,
- la totalité de la portion axialement extérieure droite.

Dans une troisième configuration des portions axialement intérieure inclinée et extérieure droite, la portion axialement intérieure fine est constituée de la portion axialement intérieure inclinée, et la portion axialement extérieure large est constituée de la portion axialement extérieure droite.

Dans des modes de réalisation optionnels, on pourra envisager que la portion axialement intérieure fine est non-débouchante dans une des première et deuxième découpure circonférentielle principale axialement extérieure qui lui est adjacente. Dans ces mode de réalisation, on parlera de découpures transversales hybrides borgnes.

Dans d'autres modes de réalisation optionnels et préférés, la portion axialement intérieure fine est débouchante dans une des première et deuxième découpure circonférentielle principale axialement extérieure qui lui est adjacente. Ainsi, on favorise la mobilité de la sculpture par rapport aux cas des découpures transversales hybrides borgnes ce qui améliore la mise à plat du pneumatique et par conséquent, la résistance au roulement.

Dans des modes de réalisation préférés et optionnels, chaque découpure transversale hybride comprend une portion axialement terminale ménagée axialement à l'extérieur de la au moins une des première et deuxième portions axialement latérales et communiquant avec la portion axialement extérieure large.

Ainsi, on favorise l'évacuation de l'eau hors de la surface de roulement qui représente la surface de la bande de roulement du pneumatique au contact avec le sol.

Dans des modes de réalisation optionnels et permettant avantageusement d'améliorer l'aérodynamisme du pneumatique, l'angle entre :
- une première tangente à un premier point d'une ligne de raccordement entre le fond de la portion axialement terminale de la découpure transversale hybride et la surface externe du pneumatique qui lui est axialement extérieure, et
- une deuxième tangente à un deuxième point du fond de la portion axialement terminale de la découpure transversale hybride situé à une distance de 2,5 mm axialement vers l'intérieur du premier point de la ligne de raccordement,
est, dans le plan de coupe méridien situé à équidistance du bord d'attaque et du bord de fuite de la découpure transversale hybride joints par la ligne de raccordement, inférieur ou égal à 20°, de préférence à 15° et plus préférentiellement à 10°.

La consommation énergétique associée à l'utilisation d'un pneumatique est due non seulement à la résistance au roulement générée par la pneumatique mais également à la résistance aérodynamique du pneumatique. Les inventeurs, en plus des aspects de l'invention précédemment expliqués et relatifs aux arrachements, ont également compris que, parmi les caractéristiques susceptibles de réduire la résistance aérodynamique, l'agencement de la portion axialement terminale était pertinent. Les inventeurs ont optionnellement découvert que, plus la pente du fond de la portion axialement terminale de ces découpures transversales était différente de la pente de la surface externe du pneumatique agencée axialement à l'extérieure des découpures transversales, plus les découpures transversales perturbaient l'écoulement de l'air en surface du pneumatique et plus la résistance aérodynamique était importante. En effet, avec des pentes significativement différentes, chaque découpure transversale forme un enfoncement soudain et abrupt pour l'écoulement de l'air selon la direction circonférentielle. Au contraire, plus la pente du fond de la portion axialement terminale de ces découpures transversales est proche de la pente de la surface externe du pneumatique agencée axialement à l'extérieure des découpures transversales, moins les découpures transversales perturbent l'écoulement de l'air en surface du pneumatique et moindre est la résistance aérodynamique. En effet, avec des pentes relativement proches, chaque découpure transversale forme un enfoncement dont la transition avec la surface externe est douce et progressive ce qui perturbe moins l'écoulement de l'air selon la direction circonférentielle.

Ainsi, la première tangente au premier point situé sur la ligne de raccordement caractérise, dans le plan méridien précédemment défini, la pente de la surface externe du pneumatique. La deuxième tangente au deuxième point situé sur le fond de la portion axialement terminale de la découpure caractérise, dans le plan méridien précédemment défini, la pente du fond de la portion axialement terminale de la découpure transversale.

En considérant un deuxième point situé axialement à 2,5 mm du premier point, on s'assure que les pentes sont relativement proches à une distance relativement grande de la ligne de raccordement, c'est-à-dire là où la profondeur de la découpure transversale commence à être importante et donc là où la perturbation de l'écoulement de l'air a la plus grande influence sur la résistance aérodynamique.

En outre, en considérant un deuxième point situé axialement à 2,5 mm du premier point, cela permet de considérer les modes de réalisation dans lesquels le fond de la portion axialement terminale de la découpure transversale présente une courbure orientée dans le même sens que la surface externe du pneumatique comme les modes de réalisation dans lesquels le fond de la portion axialement terminale de la découpure transversale présente un changement de courbure à proximité de la ligne de raccordement. De tels modes de réalisation sont envisageables notamment dans le cas où le raccordement entre le fond de la découpure transversale et la surface externe est faite au moyen d'un congé ou d'un arrondi.

La portion axialement terminale permet notamment l'évacuation de l'eau hors de la surface de roulement qui représente la surface de la bande de roulement du pneumatique au contact avec le sol. La portion axialement terminale est donc essentielle afin d'obtenir une bonne performance d'adhérence sur sol mouillé.

Dans des modes de réalisation optionnels et avantageux permettant de faciliter l'évacuation de l'eau, la distance entre le bord d'attaque et le bord de fuite mesurée le long de la ligne de raccordement est supérieure ou égale à 0,7 mm, de préférence va de 0,7 mm à 6,0 mm et plus préférentiellement va de 3,0 mm à 5,0 mm.

De façon conventionnelle, le pneumatique comprend un sommet, deux flancs, deux bourrelets, chaque flanc reliant chaque bourrelet au sommet. Toujours de façon conventionnelle, le sommet comprend la bande de roulement et une armature de sommet agencée radialement à l'intérieur de la bande de roulement. Le pneumatique comprend également une armature de carcasse ancrée dans chaque bourrelet et s'étendant radialement dans chaque flanc et axialement dans le sommet radialement intérieurement à l'armature de sommet.

De façon conventionnelle, l'armature de sommet comprend au moins une couche de sommet comprenant des éléments de renforcement. Ces éléments de renforcement sont préférentiellement des éléments filaires textiles ou métalliques.

Dans des modes de réalisation permettant l'obtention des performances de pneumatiques dits radiaux comme défini par l'ETRTO, l'armature de carcasse comprend au moins une couche de carcasse, la ou chaque couche de carcasse comprenant des éléments de renforcement filaires de carcasse, chaque élément de renforcement filaire de carcasse s'étendant sensiblement selon une direction principale formant avec la direction circonférentielle du pneumatique, un angle, en valeur absolue, allant de 80° à 90°.

L'invention sera mieux comprise à la lecture de la description qui va suivre, donnée uniquement à titre d'exemple non limitatif et faite en se référant aux dessins dans lesquels:
- la figure 1 est une vue de dessus de la bande de roulement d'un pneumatique selon l'invention,
- la figure 2 est une vue, dans un plan de coupe méridien parallèle à l'axe de rotation du pneumatique, du pneumatique de la figure 1,
- la figure 3 est une vue en arraché du pneumatique de la figure 1 illustrant l'agencement des éléments de renforcement filaires dans et sous le sommet,
- la figure 4 est une vue de dessus d'une découpure transversale hybride du pneumatique de la figure 1,
- la figure 5 est une vue de côté de la découpure transversale hybride de la figure 4,
- les figures 6 à 9 sont des vues dans les différents plans de coupe respectivement VI-VI', VII-VII', VIII-VIII' et IX-IX' de la découpure transversale hybride des figures 4 et 5,
- la figure 10 est une vue analogue à celle de la figure 4 d'une autre découpure transversale hybride du pneumatique de la figure 1, et
- la figure 11 est une vue de détail, dans un plan de coupe méridien parallèle à l'axe de rotation du pneumatique, du point de raccordement d'une découpure transversale hybride du pneumatique de la figure 1 avec la surface externe du pneumatique.

Dans les figures relatives au pneumatique, on a représenté un repère X, Y, Z correspondant aux directions habituelles respectivement axiale (Y), radiale (Z) et circonférentielle (X) d'un pneumatique.

Dans la description qui suit et ce qui précède, sauf mention contraire explicite, les mesures sont réalisées sur un pneumatique non chargé et non gonflé ou sur une coupe de pneumatique dans un plan méridien.

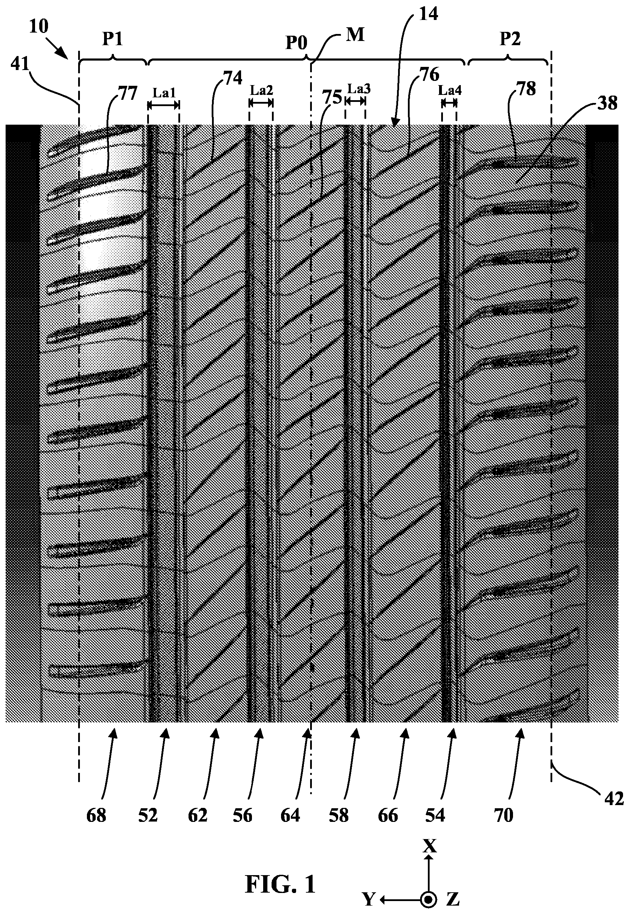

On a représenté sur les figures 1 à 3 un pneumatique, conforme à l'invention et désigné par la référence générale 10. Le pneumatique 10 présente une forme sensiblement torique autour d'un axe de révolution sensiblement parallèle à la direction axiale Y. Le pneumatique 10 est destiné à un véhicule de tourisme et présente des dimensions 235/55 R19. Sur les différentes figures, le pneumatique 10 est représenté à l'état neuf, c'est-à-dire n'ayant pas encore roulé.

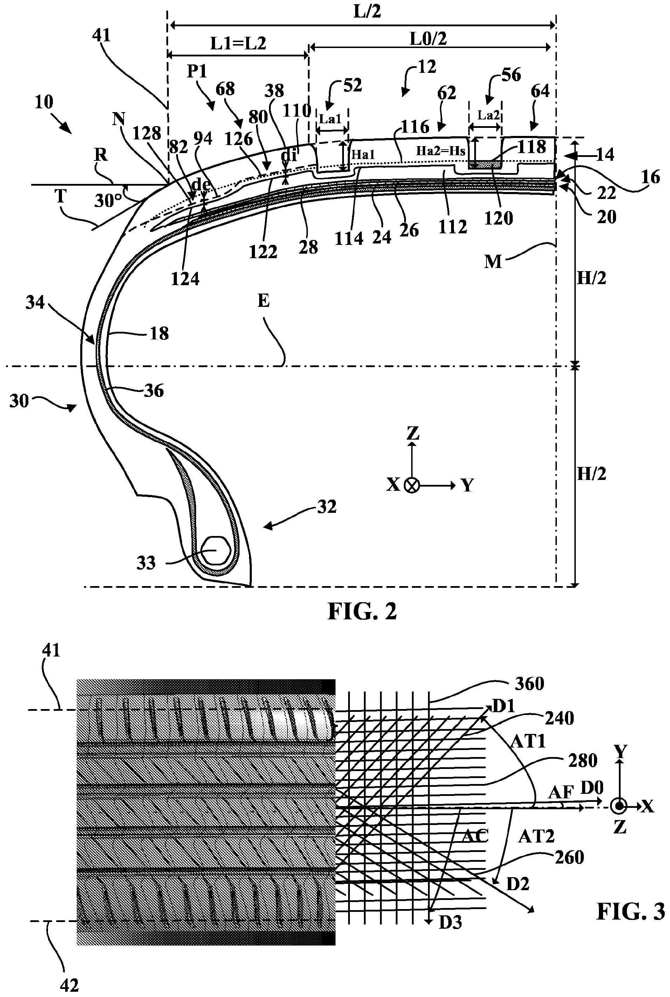

En référence à la figure 2, le pneumatique 10 comprend un sommet 12 comprenant une bande de roulement 14 destinée à entrer en contact avec un sol lors du roulage et une armature de sommet 16 s'étendant dans le sommet 12 selon la direction circonférentielle X. Le pneumatique 10 comprend également une couche d'étanchéité 18 à un gaz de gonflage étant destiné à délimiter une cavité interne fermée avec un support de montage du pneumatique 10 une fois le pneumatique 10 monté sur le support de montage, par exemple une jante.

L'armature de sommet 16 comprend une armature de travail 20 et une armature de frettage 22. L'armature de travail 20 comprend au moins une couche de travail et ici comprend deux couches de travail comprenant une couche de travail 24 radialement intérieure agencée radialement à l'intérieur d'une couche de travail 26 radialement extérieure.

L'armature de frettage 22 comprend au moins une couche de frettage et comprend ici une couche de frettage 28.

L'armature de sommet 16 est surmontée radialement de la bande de roulement 14. Ici, l'armature de frettage 22, ici la couche de frettage 28, est agencée radialement à l'extérieur de l'armature de travail 20 et est donc radialement intercalée entre l'armature de travail 20 et la bande de roulement 14.

Le pneumatique 10 comprend deux flancs 30 prolongeant le sommet 12 radialement vers l'intérieur. Le pneumatique 10 comporte en outre deux bourrelets 32 radialement intérieurs aux flancs 30. Chaque flanc 30 relie chaque bourrelet 32 au sommet 12.

Le pneumatique 10 comprend une armature de carcasse 34 ancrée dans chaque bourrelet 32, en l'espèce est enroulée autour d'une tringle 33. L'armature de carcasse 34 s'étend radialement dans chaque flanc 30 et axialement dans le sommet 12, radialement intérieurement à l'armature de sommet 16. L'armature de sommet 16 est agencée radialement entre la bande de roulement 14 et l'armature de carcasse 34. L'armature de carcasse 34 comprend au moins une couche de carcasse 36.

En référence à la figure 3, chaque couche de travail 24, 26 de frettage 28 et de carcasse 36 comprend une matrice élastomérique dans laquelle sont noyés un ou des éléments de renfort filaires de la couche correspondante.

L'armature de frettage 22, ici la couche de frettage 28, comprend un ou plusieurs éléments de renfort filaires de frettage 280 enroulés circonférentiellement hélicoïdalement selon une direction principale D0 formant, avec la direction circonférentielle X du pneumatique 10, un angle AF, en valeur absolue, inférieur ou égal à 10°, de préférence inférieur ou égal à 7° et plus préférentiellement inférieur ou égal à 5°. Ici, AF=-5°.

Chaque couche de travail radialement intérieure 24 et radialement extérieure 26 comprend respectivement des éléments de renfort filaires de travail 240, 260 s'étendant selon des directions principales D1, D2 formant avec la direction circonférentielle X du pneumatique 10, des angles respectivement AT1 et AT2 d'orientations opposées et en valeur absolue, strictement supérieurs à 10°, de préférence allant de 15° à 50° et plus préférentiellement allant de 15° à 30°. Ici, AT1=-26° et AT2=+26°.

La couche de carcasse 36 comprend des éléments de renfort filaires de carcasse 360 s'étendant selon une direction principale D3 formant avec la direction circonférentielle X du pneumatique 10, un angle AC, en valeur absolue, supérieur ou égal à 60°, de préférence allant de 80° à 90° et ici AC=+90°.

Chaque élément de renfort filaire de frettage 280 comprend classiquement deux brins multifilamentaires, chaque brin multifilamentaire étant constitué d'un filé de monofilaments de polyamide aliphatique, ici de nylon d'un titre égal à 140 tex, ces deux brins multifilamentaires étant mis en hélice individuellement à 250 tours par mètre dans un sens puis mis en hélice ensemble à 250 tours par mètre dans le sens opposé. Ces deux brins multifilamentaires sont enroulés en hélice l'un autour de l'autre. En variante, on pourra utiliser un élément de renfort filaire de frettage comprenant un brin multifilamentaire constitué d'un filé de monofilaments de polyamide aliphatique, ici de nylon d'un titre égal à 140 tex et un brin multifilamentaire constitué d'un filé de monofilaments de polyamide aromatique, ici d'aramide d'un titre égal à 167 tex, ces deux brins multifilamentaires étant mis en hélice individuellement à 290 tours par mètre dans un sens puis mis en hélice ensemble à 290 tours par mètre dans le sens opposé. Ces deux brins multifilamentaires sont enroulés en hélice l'un autour de l'autre. Dans cette variante, on aura AT1=-29° et AT2=+29°

Chaque élément de renfort filaire de travail 240, 260 est un assemblage de deux monofilaments en acier enroulés en hélice au pas de 14 mm, chaque monofilament en acier présentant un diamètre égal à 0,30 mm. En variante, on pourra également utiliser un assemblage de six monofilaments en acier présentant un diamètre égal à 0,23 mm et comprenant une couche interne de deux monofilaments enroulés ensemble en hélice au pas de 12,5 mm dans un premier sens, par exemple le sens Z, et une couche externe de quatre monofilaments enroulés ensemble en hélice autour de la couche interne au pas de 12,5 mm dans un deuxième sens opposé au premier sens, par exemple le sens S. Dans une autre variante, chaque élément de renfort filaire de travail est constitué d'un monofilament en acier présentant un diamètre égal à 0,30 mm. D'une manière plus générale, les monofilaments en acier présentent des diamètres allant de 0,25 mm à 0,32 mm.

Chaque élément de renfort filaire de carcasse 360 comprend classiquement deux brins multifilamentaires, chaque brin multifilamentaire étant constitué d'un filé de monofilaments de polyester, ici de PET, ces deux brins multifilamentaires étant mis en hélice individuellement à 240 tours par mètre dans un sens puis mis en hélice ensemble à 240 tours par mètre dans le sens opposé. Chacun de ces brins multifilamentaires présente un titre égal à 220 tex. Dans d'autres variantes, on pourra utiliser des titres égaux à 144 tex et des torsions égales à 420 tours par mètre ou des titres égaux à 334 tex et des torsions égales à 270 tours par mètre.

En référence aux figures 1 et 2, la bande de roulement 14 comprend une surface de roulement 38 par l'intermédiaire de laquelle la bande de roulement 14 entre en contact avec le sol. La surface de roulement 38 est destinée à entrer en contact avec le sol lors du roulage du pneumatique 10 sur le sol. La surface de roulement est délimitée axialement par des premier et deuxième bords axiaux 41, 42 passant par chaque point N agencé de part et d'autre du plan médian M et pour lequel l'angle entre la tangente T à la surface de roulement 38 et une droite parallèle R à la direction axiale Y passant par ce point est égal à 30°.

La bande de roulement 14 comprend une portion axialement centrale P0 et des première et deuxième portions axialement latérales P1, P2 agencées axialement à l'extérieur de la portion axialement centrale P0 de part et d'autre axialement de la portion axialement centrale P0 par rapport au plan médian M du pneumatique 10.

Sans que cela soit spécifique au mode de réalisation illustré, la portion axialement centrale P0 présente une largeur axiale L0 supérieure ou égale à 50%, de préférence supérieure ou égale à 60% et inférieure ou égale à 80%, de préférence inférieure ou égale à 70% de la largeur axiale L de la surface de roulement 38 du pneumatique 10 à l'état neuf. Chaque première et deuxième portion axialement latérale P1, P2 présente une largeur axiale L1, L2 inférieure ou égale à 25%, de préférence inférieure ou égale à 20% et supérieure ou égale à 5%, de préférence supérieure ou égale à 10% de la largeur axiale L de la surface de roulement 38 du pneumatique 10 à l'état neuf. Le rapport de la largeur axiale L0 de la portion centrale P0 sur la largeur axiale L1, L2 de chaque première et deuxième portion axialement latérale P1, P2 est supérieur ou égale à 3,0, de préférence va de 3,0 à 5,0 et plus préférentiellement va de 4,0 à 4,5.

La bande de roulement 14 comprend N>1 découpures circonférentielles principales, ici N rainures circonférentielles principales, comprenant des première, deuxième, troisième et quatrième découpures circonférentielles principales respectivement désignées par les références 52, 54, 56, 58. Les première et deuxième découpures circonférentielles principales 52, 54 sont agencées axialement de part et d'autre du plan médian M du pneumatique 10 et sont les découpures circonférentielles principales axialement les plus extérieures de la bande de roulement 14.

La première portion axialement latérale P1 et la deuxième portion axialement latérale P2 sont agencées respectivement axialement à l'extérieur de la première découpure circonférentielle principale axialement extérieure 52 et de la deuxième découpure circonférentielle principale axialement extérieure 54. La première portion axialement latérale P1 s'étend axialement depuis le premier bord axial 41 de la surface de roulement 38 jusqu'à la première découpure circonférentielle principale 52. La deuxième portion axialement latérale P2 s'étend axialement depuis le deuxième bord axial 42 de la surface de roulement 38 jusqu'à la deuxième découpure circonférentielle principale 54.

Chaque découpure circonférentielle principale 52 à 58 est munie de chanfreins arrondis. Chaque découpure circonférentielle principale 52 à 58 présente une profondeur Ha1, Ha2 allant de 4,0 mm à la hauteur de sculpture Hs, de préférence allant de 5,0 mm à la hauteur de sculpture Hs et plus préférentiellement allant de 5,5 mm à la hauteur de sculpture Hs. Chaque profondeur Ha1, Ha2 est supérieure ou égale à 50% de la hauteur de sculpture Hs. Ici, Hs=6,5 mm, Ha1=6,0 mm pour chaque première et deuxième découpure circonférentielle principale axialement extérieure 52, 54 et Ha2=6,5 mm pour chaque découpure circonférentielle principale 56, 58 de la portion axialement centrale P0. Ainsi, chaque découpure circonférentielle principale 52, 54, 56, 58 présente avantageusement une profondeur telle que Ha1/Hs ≥ 75%, Ha2/Hs ≥ 75% et plus préférentiellement Ha1/Hs ≥ 90%, Ha2/Hs ≥ 90%.

Chaque découpure circonférentielle principale 52 à 58 présente respectivement une largeur axiale La1, La2, La3, La4 supérieure ou égale à 1,0 mm, de préférence supérieure ou égale à 5,0 mm et plus préférentiellement allant de 5,0 mm à 20,0 mm. Ici, La1=15,0 mm, La2=13,0 mm, La3= 10,30 mm et La4=7,0 mm.

La portion axialement centrale P0 comprend des nervures centrales et ici des première, deuxième et troisième nervures centrales respectivement désignées par les références 62, 64, 66. Chaque nervure centrale 62, 64, 66 est agencée axialement entre deux des découpures circonférentielles principales adjacentes 52 à 58 et est délimitée axialement par deux découpures circonférentielles principales adjacentes 52 à 58.

Chaque nervure centrale 62, 64, 66 comprend des découpures transversales 74, 75, 76 présentant une largeur inférieure ou égale à 1,0 mm et plus préférentiellement strictement inférieure ou égale à 0,6 mm et ici égale à 0,4 mm. Chaque découpure transversale 74, 75, 76 présente une profondeur Hb égale à 3,5 mm.

Chaque première et deuxième portion axialement latérale P1, P2 comprend respectivement une première et une deuxième nervure latérale respectivement désignées par les références 68, 70 et ici est constituée respectivement par chaque première et deuxième nervure latérale 68, 70.

La bande de roulement 14 comprend des découpures transversales 77, 78 ménagées au moins en partie dans au moins une des première et deuxième portions axialement latérales P1, P2 et ici ménagées au moins en partie dans chaque première et deuxième portion axialement latérale P1, P2. Ces découpures transversales 77, 78 sont dites hybrides pour les raisons décrites précédemment. Au moins 50%, de préférence au moins 75%, plus préférentiellement au moins 90% et ici 100% des découpures transversales ménagées au moins en partie dans au moins une des première et deuxième portions axialement latérales P1, P2 et ici ménagées au moins en partie dans chaque première et deuxième portion axialement latérale P1, P2 sont des découpures transversales hybrides 77, 78.

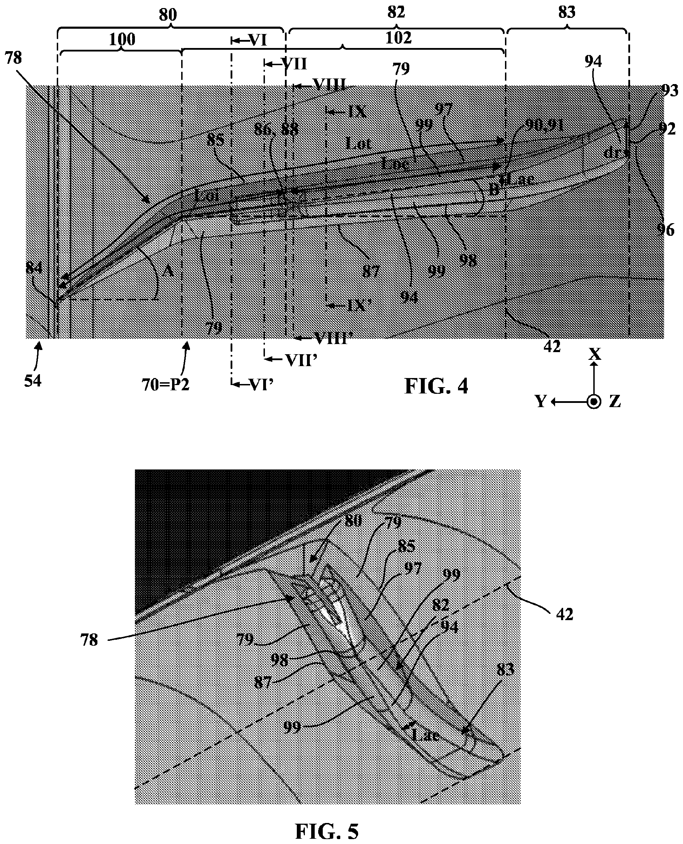

En référence aux figures 4 à 9, on va maintenant décrire les découpures transversales hybrides 78, qui lorsque le pneumatique est monté sur une roue, sont les découpures transversales hybrides situées côté extérieur de la roue et donc côté extérieur du véhicule.

Chaque découpure transversale hybride 78 est munie de chanfreins 79 et est délimitée circonférentiellement par un bord d'attaque 85 et un bord de fuite 87. Chaque découpure transversale hybride 78 comprend une portion axialement intérieure dite fine 80, une portion axialement extérieure dite large 82 et une portion axialement terminale 83 ménagée axialement à l'extérieur de la deuxième portion axialement latérale P2 et communiquant avec la portion axialement extérieure large 82. Chaque découpure transversale hybride 78 présente une longueur curviligne Lot de la partie de chaque découpure transversale hybride ménagée dans la deuxième portion axialement latérale P2. Ici, Lot=45 mm. Les portions 80, 82 et 83 sont adjacentes.

La portion axialement intérieure fine 80 est la portion axialement la plus intérieure de la découpure transversale hybride 78 dans la deuxième portion axialement latérale P2. La portion axialement intérieure fine 80 s'étend depuis une extrémité axialement intérieure 84 jusqu'à une extrémité axialement extérieure 86. La portion axialement intérieure fine 80 est débouchante dans la découpure circonférentielle principale 54 qui lui est adjacente. La portion axialement intérieure fine présente une longueur curviligne Loi au moins égale à 20% et au plus égale à 75% de la longueur curviligne Lot. Ici Loi=23 mm soit 51% de la longueur curviligne Lot.

La portion axialement extérieure large 82 communique avec la portion axialement intérieure fine 80 et est agencée axialement à l'extérieur de la portion axialement intérieure fine 80. La portion axialement extérieure large 82 est la portion axialement la plus extérieure de la découpure transversale hybride 78 dans la deuxième portion axialement latérale P2. La portion axialement extérieure large 82 s'étend depuis une extrémité axialement intérieure 88, ici confondue avec l'extrémité axialement extérieure 86, jusqu'à une extrémité axialement extérieure 90. La portion axialement extérieure large présente une longueur curviligne Loe. Ici Loe=22 mm.

La portion axialement terminale 83 s'étend depuis une extrémité axialement intérieure 91, ici confondue avec l'extrémité axialement extérieure 90, jusqu'à une extrémité axialement extérieure. L'extrémité axialement extérieure 93 est matérialisée par une ligne de raccordement 92 entre le fond 94 de la portion axialement terminale 83 de la découpure transversale hybride 78 et la surface externe 96 du pneumatique 10 qui lui est axialement extérieure.

On notera que sur la figure 4, pour des raisons de clarté, les longueurs curvilignes ne sont pas représentées comme étant les longueurs mesurées selon la courbe passant à équidistance des bords d'attaque 85 et de fuite 87 entre les deux extrémités de la découpure transversale hybride 78 ou de chaque portion 80, 82. Néanmoins, comme cela a été décrit précédemment, leur mesure doit bien être réalisée selon la courbe passant à équidistance des bords d'attaque 85 et de fuite 87 entre les deux extrémités de la découpure transversale hybride 78 ou de chaque portion 80, 82

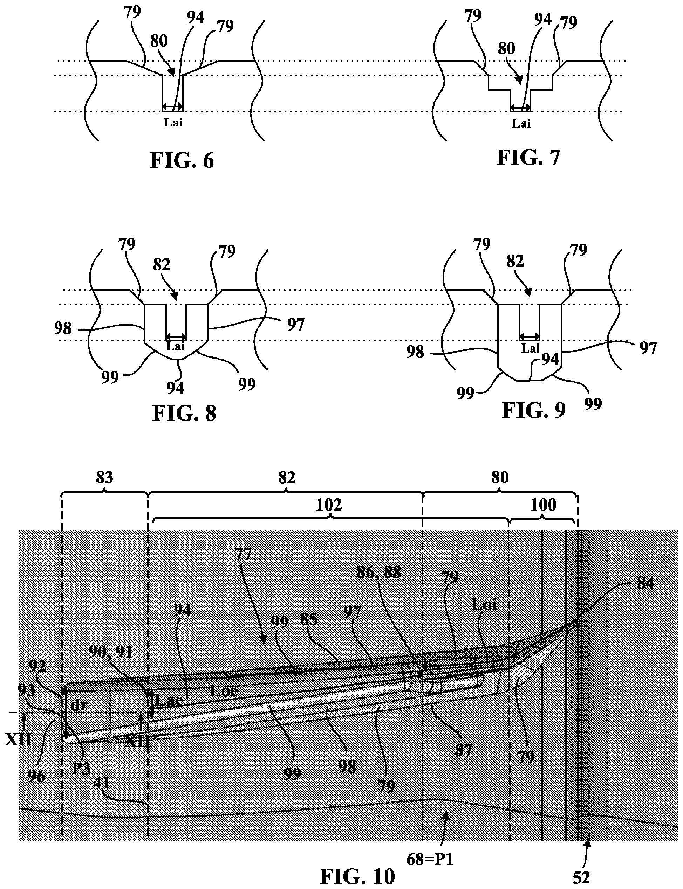

Comme illustré sur les figures 6 à 9, la portion axialement intérieure fine 80 présente un fond 94 de découpure transversale hybride, et en fond 94 de découpure, une largeur Lai allant de 0,2 mm à 0,6 mm, de préférence de 0,2 mm à 0,5 mm et ici Lai=0,4 mm. La portion axialement intérieure fine 80 présente une profondeur allant de 2,0 mm à 5,5 mm, de préférence allant de 3,0 mm à 5,0 mm et ici égale à 4,4 mm.

La portion axialement extérieure large présente, en fond 94 de découpure, une largeur Lae allant de 0,7 mm à 5,0 mm, de préférence de 1,0 mm à 5,0 mm et plus préférentiellement de 2,0 mm à 4,5 mm. Comme défini précédemment, la largeur Lae est la distance maximale, en fond 94 de découpure, entre les deux faces latérales principales 97, 98 de la portion axialement extérieure large 82 et donc mesurée ici à l'extrémité 90. Comme cela est visible sur la figure 1, les portions axialement extérieure larges 82 présentent des largeurs Lae différentes et réparties de façon aléatoires afin de limiter le bruit de sirènement. En l'espèce, les différentes largeurs Lae utilisées sont égales à 3,1 mm, 3,7 mm et 4,1 mm. La portion axialement extérieure large 82 présente une profondeur allant de 2,0 mm à 5,5 mm, de préférence allant de 3,0 mm à 5,0 mm et ici égale à 4,6 mm.

Comme illustré sur les figures 4, 5, 8 et 9, la portion axialement extérieure large présente deux faces principales latérales d'attaque 97 et de fuite 98 reliée au fond 94 de la découpure transversale hybride 78 par des congés 99.

Au sein de la portion axialement terminale 83, la distance dr entre le bord d'attaque 85 et le bord de fuite 87 mesurée le long de la ligne de raccordement 92 est supérieure ou égale à 0,7 mm, de préférence va de 0,7 mm à 6,0 mm et plus préférentiellement va de 3,0 mm à 5,0 mm. Ici, les différentes valeur de dr sont égales à 3,4 mm, 3,6 mm et 4,7 mm.

En revenant aux figures 4 et 5, chaque découpure transversale hybride 78 comprend une portion axialement intérieure dite inclinée 100 ménagée dans la deuxième portion axialement latérale P2 et une portion axialement extérieure dite droite 102 agencée axialement à l'extérieur de la portion axialement intérieure inclinée 100 également ménagée dans la deuxième portion axialement latérale P2. Les portions 100 et 102 sont adjacentes.

La portion axialement intérieure inclinée 100 présente un angle moyen A avec la direction axiale Y supérieur ou égal à 15°, de préférence à 20° et ici A=23°. La portion axialement intérieure inclinée 100 est la portion axialement la plus intérieure de la découpure transversale hybride 78 dans la deuxième portion axialement latérale P2.

La portion axialement extérieure droite 102 présente un angle moyen B avec la direction axiale Y strictement inférieur à l'angle moyen de la portion axialement intérieure inclinée 100. L'angle moyen de la portion axialement extérieure droite 102 est strictement inférieur à 25°, de préférence inférieur ou égal à 20° et plus préférentiellement inférieur ou égal à 15° et ici égal à 8°. La portion axialement extérieure droite 102 est la portion axialement la plus extérieure de la découpure transversale hybride 78 dans la deuxième portion axialement latérale P2.

En l'espèce, la portion axialement intérieure fine 80 comprend au moins une partie de la portion axialement intérieure inclinée 100 et ici comprend la totalité de la portion axialement intérieure inclinée 100 ainsi qu'une première partie de la portion axialement extérieure droite 102 allant jusqu'à l'extrémité 86, 88 commune aux portions 80, 82. La portion axialement extérieure large 82 comprend une deuxième partie de la portion axialement extérieure droite allant depuis l'extrémité 86, 88 jusqu'au deuxième bord axial 42 de la surface de roulement 38.

On a représenté sur la figure 10 une des découpures transversales hybrides 77. A des fins de concisions, la figure 10 reprend les références identiques pour des éléments analogue à ceux représentés sur la figure 4 illustrant une découpure transversale hybride 78.

A la différence des découpures transversales hybrides 78, chaque découpure transversale hybride 77 est telle que Lot=38 mm, Loi=14 mm et Loe=24 mm. En outre, les angles A et B sont tels que A=25° et B=8°.

En revenant à la figure 2, le pneumatique 10 comprend une couche de roulement 110 et une couche de support 112 de la couche de roulement 110. La couche de support 112 est agencée radialement à l'intérieur de la couche de roulement 110. La couche de roulement 110 et la couche de support 112 sont jointives par l'intermédiaire d'une interface 114. La couche de support 112 présente une résistance au roulement très faible caractérisée par une perte dynamique tanDMAX23 mesurée selon la norme ASTM D-5992-96, à une température de 23°C et à une fréquence de 10Hz égale à 0,095.

Toujours dans le plan de coupe méridienne de la figure 2, on définit, une trajectoire d'usure réglementaire 116 parallèle à la surface de roulement 38 du pneumatique 10 et passant par la surface radialement externe 118 du témoin d'usure réglementaire 120. Dans le mode de réalisation illustré, au moins une partie 122 de la portion de l'interface 114 agencée radialement au droit de la portion axialement intérieure fine 80 est agencée radialement à l'extérieur d'au moins une partie 124 de la portion de l'interface 114 agencée radialement au droit de la portion axialement extérieure large 82.

On a également représenté le fond 94 d'une découpure transversale hybride 77. L'intégralité du fond 94 de chaque découpure transversale hybride 77, 78 est agencée radialement à l'extérieur de l'interface 114 entre la couche de roulement 110 et la couche de support 112. En outre, au moins une partie 126 du fond 94 de la portion axialement intérieure fine 80 est agencée à une distance radiale di de l'interface 114 strictement supérieure à la distance radiale de à laquelle est agencée au moins une partie 128 du fond 94 de la portion axialement extérieure large 82.

Dans le mode de réalisation illustré, au moins 60%, de préférence au moins 75% et ici 100% de la longueur curviligne Loi de la portion axialement intérieure fine 80 est agencée à une distance radiale di de l'interface 114 strictement supérieure à une distance radiale moyenne dem à laquelle est agencée le fond 94 de la portion axialement extérieure large 82.

Plus précisément, le fond 94 de la portion axialement intérieure fine 80 est agencé à une distance radiale moyenne dim de l'interface 114 strictement supérieure à la distance radiale moyenne dem à laquelle est agencée le fond 94 de la portion axialement extérieure large 82. La distance radiale moyenne dem entre le fond de la portion axialement extérieure large 82 et l'interface 114 va de 0,3 mm à 1,0 mm, de préférence de 0,4 mm à 0,9 mm. La distance radiale moyenne dim entre le fond 94 de la portion axialement intérieure fine 80 et l'interface 114 va de 0,5 mm à 1,5 mm, de préférence de 0,6 mm à 1,2 mm. Ici, dem=0,5 mm et dim=1,0 mm.

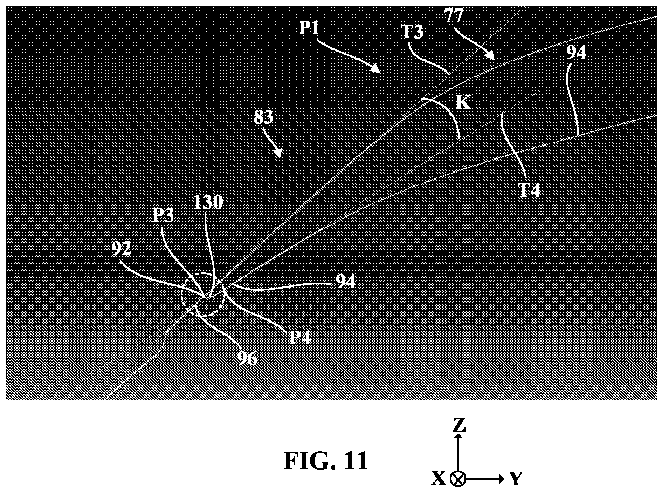

La figure 11 illustre une vue dans un plan de coupe méridien XII-XII' de la figure 10 situé à équidistance du bord d'attaque 85 et du bord de fuite 87 joints par la ligne de raccordement 92. Le fond 94 de la portion axialement terminale 83 comprend un congé 130 formant une jonction entre le fond 94 et la ligne de raccordement 92. Sur cette figure 11, on a tracé une première tangente T3 à un premier point P3 et une deuxième tangente T4 à un deuxième point P4. Le premier point P3 est le point, qui dans le plan XII-XII', est le point de la ligne de raccordement 92. Le deuxième point P4 est un point du fond 94 de la portion axialement terminale 83 de la découpure transversale hybride 77 situé à une distance de 2,5 mm axialement vers l'intérieure du premier point P3 de la ligne de raccordement 92. Cette distance de 2,5 mm est, sur la figure 11, représentée par un cercle en traits pointillés d'un diamètre de 5,0 mm et dont le centre est le premier point P3. L'angle K entre la première tangente T3 et la deuxième tangente T4 est inférieur ou égal à 20°, de préférence à 15° et ici égal à 11°. Dans d'autres mode de réalisation encore plus avantageux, l'angle K pourrait être inférieur ou égal à 10°.

L'invention ne se limite pas au mode de réalisation décrit précédemment.

## Revendications

1. Pneumatique (10) pour véhicule de tourisme comprenant une bande de roulement (14) destinée à entrer en contact avec le sol lors d'un roulage du pneumatique (10) par l'intermédiaire de la surface de roulement (38), la bande de roulement (14) comprenant :
- des découpures circonférentielles principales (52, 54, 56, 58) présentant une profondeur (Ha1, Ha2) supérieure ou égale à 50% de la hauteur de sculpture (Hs) comprenant des première et deuxième découpures circonférentielles principales axialement extérieures (52, 54) agencées axialement de part et d'autre du plan médian (M) du pneumatique (10), les première et deuxième découpures circonférentielles principales axialement extérieures (52, 54) étant les découpures circonférentielles principales axialement les plus extérieures de la bande de roulement (14),
- une première portion axialement latérale (P1) agencée axialement à l'extérieur de la première découpure circonférentielle principale axialement extérieure (52) et s'étendant axialement depuis un premier bord axial (41) de la surface de roulement (38) jusqu'à la première découpure circonférentielle principale axialement extérieure (52),
- une deuxième portion axialement latérale (P2) agencée axialement à l'extérieur de la deuxième découpure circonférentielle principale axialement extérieure (54) et s'étendant axialement depuis un deuxième bord axial (42) de la surface de roulement (38) jusqu'à la deuxième découpure circonférentielle principale axialement extérieure (54),
le pneumatique (10) comprenant une couche de roulement (110) et une couche de support (112) de la couche de roulement (110), la couche de support (112) étant agencée radialement à l'intérieur de la couche de roulement (110),
**caractérisé en ce que** la bande de roulement (14) comprend des découpures transversales dites hybrides (77, 78) ménagées au moins en partie dans au moins une des première et deuxième portions axialement latérales (P1, P2), chaque découpure transversale hybride (77, 78) comprend :
- une portion axialement intérieure (80) dite fine, présentant en fond (94) de découpure, une largeur (Lai) allant de 0,2 mm à 0,6 mm, la portion axialement intérieure fine (80) étant la portion axialement la plus intérieure de la découpure transversale hybride (77, 78) dans la au moins une des première et deuxième portions axialement latérales (P1, P2),
- une portion axialement extérieure (82) dite large, présentant en fond (94) de découpure, une largeur (Lae) allant de 0,7 mm à 5,0 mm, communiquant avec la portion axialement intérieure fine (80), agencée axialement à l'extérieur de la portion axialement intérieure fine (80), la portion axialement extérieure large (82) étant la portion axialement la plus extérieure de la découpure transversale hybride (77, 78) dans la au moins une des première et deuxième portions axialement latérales (P1, P2),
**en ce que**, chaque découpure transversale hybride (77, 78) présentant un fond (94) de découpure transversale hybride, l'intégralité du fond (94) de chaque découpure transversale hybride (77, 78) est agencée radialement à l'extérieur d'une interface (114) entre la couche de roulement (110) et la couche de support (112),
et **en ce que**, au moins une partie (126) du fond (94) de la portion axialement intérieure fine (80) est agencée à une distance radiale (di) de l'interface (114) strictement supérieure à la distance radiale (de) à laquelle est agencée au moins une partie (128) du fond (94) de la portion axialement extérieure large (82).

2. Pneumatique (10) selon la revendication précédente, dans lequel au moins 60%, de préférence au moins 75% de la longueur curviligne (Loi) de la portion axialement intérieure fine (80) est agencée à une distance radiale (di) de l'interface (114) strictement supérieure à une distance radiale moyenne (dem) à laquelle est agencée le fond (94) de la portion axialement extérieure large (82).

3. Pneumatique (10) selon l'une quelconque des revendications précédentes, dans lequel le fond (94) de la portion axialement intérieure fine (80) est agencé à une distance radiale moyenne (dim) de l'interface (114) strictement supérieure à la distance radiale moyenne (dem) à laquelle est agencée le fond (94) de la portion axialement extérieure large (82).

4. Pneumatique (10) selon l'une quelconque des revendications précédentes, dans lequel au moins une partie (122) de la portion de l'interface (114) agencée radialement au droit de la portion axialement intérieure fine (80) est agencée radialement à l'extérieur d'au moins une partie (124) de la portion de l'interface (114) agencée radialement au droit de la portion axialement extérieure large (82).

5. Pneumatique (10) selon l'une quelconque des revendications précédentes, dans lequel la bande de roulement (14) comprend des découpures transversales hybrides (77, 78) ménagées en partie dans chaque première et deuxième portion axialement latérale (P1, P2).

6. Pneumatique (10) selon l'une quelconque des revendications précédentes, dans lequel au moins 50%, de préférence au moins 75% et plus préférentiellement au moins 90% des découpures transversales ménagées au moins en partie dans au moins une des première et deuxième portions axialement latérales (P1 , P2), de préférence ménagées au moins en partie dans chaque première et deuxième portion axialement latérale (P1, P2), sont des découpures transversales hybrides (77, 78).

7. Pneumatique (10) selon l'une quelconque des revendications précédentes, dans lequel la portion axialement intérieure fine (80) présente une longueur curviligne (Loi) au moins égale à 20% et au plus égale à 75% de la longueur curviligne (Lot) de la partie de chaque découpure transversale hybride (77, 78) ménagée dans la au moins une des première et deuxième portions axialement latérales (P1, P2).

8. Pneumatique (10) selon l'une quelconque des revendications précédentes, dans lequel la largeur (Lai) de la portion axialement intérieure fine (80) en fond (94) de découpure va de 0,2 mm à 0,5 mm.

9. Pneumatique (10) selon l'une quelconque des revendications précédentes, dans la largeur (Lae) de la portion axialement extérieure large (82) en fond (94) de découpure va de 1,0 mm à 5,0 mm, de préférence de 2,0 mm à 4,5 mm.

10. Pneumatique (10) selon l'une quelconque des revendications précédentes, dans lequel chaque découpure transversale hybride (77, 78) comprend:
- une portion axialement intérieure (100) dite inclinée ménagée dans au moins une des première et deuxième portions axialement latérales (P1, P2) et présentant un angle moyen (A) avec la direction axiale (Y) supérieur ou égal à 15°, de préférence à 20°, la portion axialement intérieure inclinée (100) étant la portion axialement la plus intérieure de la découpure transversale hybride (77, 78) dans la au moins une des première et deuxième portions axialement latérales (P1, P2),
- une portion axialement extérieure (102) dite droite ménagée dans au moins une des première et deuxième portions axialement latérales (P1, P2) et présentant un angle moyen (B) avec la direction axiale (Y) strictement inférieur à l'angle moyen (A) de la portion axialement intérieure inclinée (100) et agencée axialement à l'extérieur de la portion axialement intérieure inclinée (100), la portion axialement extérieure droite (102) étant la portion axialement la plus extérieure de la découpure transversale hybride (77, 78) dans la au moins une des première et deuxième portions axialement latérales (P1, P2).

11. Pneumatique (10) selon la revendication précédente, dans lequel l'angle moyen (B) de la portion axialement extérieure droite est strictement inférieur à 25°, de préférence inférieur ou égal à 20° et plus préférentiellement inférieur ou égal à 15°.

12. Pneumatique (10) selon la revendication 10 ou 11, dans lequel :
- la portion axialement intérieure fine (80) comprend au moins une partie de la portion axialement intérieure inclinée (100), et
- la portion axialement extérieure large (82) comprend au moins une partie de la portion axialement extérieure droite (102).

13. Pneumatique (10) selon l'une quelconque des revendications précédentes, dans lequel la portion axialement intérieure fine (80) est débouchante dans une des première et deuxième découpure circonférentielle principale axialement extérieure (52, 54) qui lui est adjacente.

14. Pneumatique (10) selon l'une quelconque des revendications précédentes, dans lequel chaque découpure transversale hybride (77, 78) comprend une portion axialement terminale (83) ménagée axialement à l'extérieur de la au moins une des première et deuxième portions axialement latérales (P1, P2) et communiquant avec la portion axialement extérieure large (82).

## Patentansprüche

1. Reifen (10) für einen Personenkraftwagen, beinhaltend einen Laufstreifen (14), der dazu bestimmt ist, während eines Rollens des Reifens (10) mittels der Lauffläche (38) mit dem Boden in Kontakt zu kommen, wobei der Laufstreifen (14) Folgendes beinhaltet:
- umlaufende Hauptausschnitte (52, 54, 56, 58), die eine Tiefe (Ha1, Ha2) größer als oder gleich 50 % der Profiltiefe (Hs) aufweisen, beinhaltend einen ersten und einen zweiten axial äußeren umlaufenden Hauptausschnitt (52, 54), die axial zu beiden Seiten der Mittelebene (M) des Reifens (10) angeordnet sind, wobei der erste und der zweite axial äußere umlaufende Hauptausschnitt (52, 54) die axial äußersten umlaufenden Hauptausschnitte des Laufstreifens (14) sind,
- einen ersten axial seitlichen Abschnitt (P1), der axial außerhalb des ersten axial äußeren umlaufenden Hauptausschnitts (52) angeordnet ist und sich axial von einem ersten axialen Rand (41) der Lauffläche (38) bis zu dem ersten axial äußeren umlaufenden Hauptausschnitt (52) erstreckt,
- einen zweiten axial seitlichen Abschnitt (P2), der axial außerhalb des zweiten axial äußeren umlaufenden Hauptausschnitts (54) angeordnet ist und sich axial von einem zweiten axialen Rand (42) der Lauffläche (38) bis zu dem zweiten axial äußeren umlaufenden Hauptausschnitt (54) erstreckt,
wobei der Reifen (10) eine Laufschicht (110) und eine Stützschicht (112) für die Laufschicht (110) beinhaltet, wobei die Stützschicht (112) radial innerhalb der Laufschicht (110) angeordnet ist,
**dadurch gekennzeichnet, dass** der Laufstreifen (14) als hybrid bezeichnete Querausschnitte (77, 78) beinhaltet, die mindestens teilweise in mindestens einem von dem ersten und dem zweiten axial seitlichen Abschnitt (P1, P2) eingerichtet sind, wobei jeder hybride Querausschnitt (77, 78) Folgendes beinhaltet:
- einen als dünn bezeichneten axial inneren Abschnitt (80), der am Ausschnittboden (94) eine Breite (Lai) im Bereich von 0,2 mm bis 0,6 mm aufweist, wobei der dünne axial innere Abschnitt (80) der axial innerste Abschnitt des hybriden Querausschnitts (77, 78) in dem mindestens einen von dem ersten und dem zweiten axial seitlichen Abschnitt (P1, P2) ist,
- einen als breit bezeichneten axial äußeren Abschnitt (82), der am Ausschnittboden (94) eine Breite (Lae) im Bereich von 0,7 mm bis 5,0 mm aufweist, mit dem dünnen axial inneren Abschnitt (80) kommuniziert, axial außerhalb des dünnen axial inneren Abschnitts (80) angeordnet ist, wobei der breite axial äußere Abschnitt (82) der axial äußerste Abschnitt des hybriden Querausschnitts (77, 78) in dem mindestens einen von dem ersten und dem zweiten axial seitlichen Abschnitt (P1, P2) ist,
dass, wobei jeder hybride Querausschnitt (77, 78) einen hybriden Querausschnittboden (94) aufweist, die Gesamtheit des Bodens (94) jedes hybriden Querausschnitts (77, 78) radial außerhalb einer Schnittstelle (114) zwischen der Laufschicht (110) und der Stützschicht (112) angeordnet ist,
und dass mindestens ein Teil (126) des Bodens (94) des dünnen axial inneren Abschnitts (80) mit einem radialen Abstand (di) von der Schnittstelle (114) angeordnet ist, der streng größer als der radiale Abstand (de) ist, mit dem mindestens ein Teil (128) des Bodens (94) des breiten axial äußeren Abschnitts (82) angeordnet ist.

2. Reifen (10) nach dem vorhergehenden Anspruch, wobei mindestens 60 %, bevorzugt mindestens 75 %, der gekrümmten Länge (Loi) des dünnen axial inneren Abschnitts (80) mit einem radialen Abstand (di) von der Schnittstelle (114) angeordnet ist, der streng größer als ein mittlerer radialer Abstand (dem) ist, mit dem der Boden (94) des breiten axial äußeren Abschnitts (82) angeordnet ist.

3. Reifen (10) nach einem der vorhergehenden Ansprüche, wobei der Boden (94) des dünnen axial inneren Abschnitts (80) mit einem mittleren radialen Abstand (dim) von der Schnittstelle (114) angeordnet ist, der streng größer als der mittlere radiale Abstand (dem) ist, mit dem der Boden (94) des axial breiten Abschnitts (82) angeordnet ist.

4. Reifen (10) nach einem der vorhergehenden Ansprüche, wobei mindestens ein Teil (122) des Abschnitts der Schnittstelle (114), der radial direkt unter dem dünnen axial inneren Abschnitt (80) angeordnet ist, radial außerhalb mindestens eines Teils (124) des Abschnitts der Schnittstelle (114) angeordnet ist, der radial direkt unter dem breiten axial inneren Abschnitt (82) angeordnet ist.

5. Reifen (10) nach einem der vorhergehenden Ansprüche, wobei der Laufstreifen (14) hybride Querausschnitte (77, 78) beinhaltet, die teilweise in jedem ersten und zweiten axial seitlichen Abschnitt (P1, P2) eingerichtet sind.

6. Reifen (10) nach einem der vorhergehenden Ansprüche, wobei mindestens 50 %, bevorzugt mindestens 75 % und noch bevorzugter mindestens 90 % der Querausschnitte, die mindestens teilweise in mindestens einem von dem ersten und dem zweiten axial seitlichen Abschnitt (P1, P2) eingerichtet sind, bevorzugt mindestens teilweise in jedem ersten und zweiten axial seitlichen Abschnitt (P1, P2) eingerichtet sind, hybride Querausschnitte (77, 78) sind.

7. Reifen (10) nach einem der vorhergehenden Ansprüche, wobei der dünne axial innere Abschnitt (80) eine gekrümmte Länge (Loi) von mindestens 20 % und höchstens 75 % der gekrümmten Länge (Lot) des Teils jedes hybriden Querausschnitts (77, 78) aufweist, der in dem mindestens einen von dem ersten und dem zweiten axial seitlichen Abschnitt (P1, P2) eingerichtet ist.

8. Reifen (10) nach einem der vorhergehenden Ansprüche, wobei die Breite (Lai) des dünnen axial inneren Abschnitts (80) am Ausschnittboden (94) von 0,2 mm bis 0,5 mm reicht.

9. Reifen (10) nach einem der vorhergehenden Ansprüche, in der Breite (Lae) des breiten axial äußeren Abschnitts (82) am Ausschnittboden (94) von 1,0 mm bis 5,0 mm, bevorzugt von 2,0 mm bis 4,5 mm, reicht.

10. Reifen (10) nach einem der vorhergehenden Ansprüche, wobei jeder hybride Querausschnitt (77, 78) Folgendes beinhaltet:
- einen als geneigt bezeichneten axial inneren Abschnitt (100), der in mindestens einem von dem ersten und dem zweiten axial seitlichen Abschnitt (P1, P2) eingerichtet ist und mit der axialen Richtung (Y) einen mittleren Winkel (A) größer als oder gleich 15°, bevorzugt 20°, bildet, wobei der geneigte axial innere Abschnitt (100) der axial innerste Abschnitt des hybriden Querausschnitts (77, 78) in dem mindestens einen von dem ersten und dem zweiten axial seitlichen Abschnitt (P1, P2) ist,
- einen als gerade bezeichneten axial äußeren Abschnitt (102), der in mindestens einem von dem ersten und dem zweiten axial seitlichen Abschnitt (P1, P2) eingerichtet ist und mit der axialen Richtung (Y) einen mittleren Winkel (B) streng kleiner als der mittlere Winkel (A) des geneigten axial inneren Abschnitts (100) bildet und axial außerhalb des geneigten axial inneren Abschnitts (100) angeordnet ist, wobei der gerade axial äußere Abschnitt (102) der axial äußerste Abschnitt des hybriden Querausschnitts (77, 78) in dem mindestens einen von dem ersten und dem zweiten axial seitlichen Abschnitt (P1, P2) ist.

11. Reifen (10) nach dem vorhergehenden Anspruch, wobei der mittlere Winkel (B) des geraden axial äußeren Abschnitts streng kleiner als 25°, bevorzugt kleiner als oder gleich 20° und noch bevorzugter kleiner als oder gleich 15° ist.

12. Reifen (10) nach Anspruch 10 oder 11, wobei:
- der dünne axial innere Abschnitt (80) mindestens einen Teil des geneigten axial inneren Abschnitts (100) beinhaltet und
- der breite axial äußere Abschnitt (82) mindestens einen Teil des geraden axial äußeren Abschnitts (102) beinhaltet.

13. Reifen (10) nach einem der vorhergehenden Ansprüche, wobei der dünne axial innere Abschnitt (80) in einem von dem ersten und dem zweiten axial äußeren umlaufenden Hauptausschnitt (52, 54), der an ihn angrenzt, mündet.

14. Reifen (10) nach einem der vorhergehenden Ansprüche, wobei jeder hybride Querausschnitt (77, 78) einen axial letzten Abschnitt (83) beinhaltet, der axial außerhalb des mindestens einen von dem ersten und dem zweiten axial seitlichen Abschnitt (P1, P2) eingerichtet ist und mit dem breiten axial äußeren Abschnitt (82) kommuniziert.

## Claims

1. Tyre (10) for a passenger vehicle, comprising a tread (14) intended to come into contact with the ground when the tyre (10) is running, via the tread surface (38), the tread (14) comprising:
- main circumferential cuts (52, 54, 56, 58) having a depth (Ha1, Ha2) greater than or equal to 50% of the tread-pattern height (Hs), comprising first and second axially outer main circumferential cuts (52, 54) arranged axially on either side of the mid-plane (M) of the tyre (10), the first and second axially outer main circumferential cuts (52, 54) being the axially outermost main circumferential cuts of the tread (14),
- a first axially lateral portion (P1) arranged axially outside the first axially outer main circumferential cut (52) and extending axially from a first axial edge (41) of the tread surface (38) to the first axially outer main circumferential cut (52),
- a second axially lateral portion (P2) arranged axially outside the second axially outer main circumferential cut (54) and extending axially from a second axial edge (42) of the tread surface (38) to the second axially outer main circumferential cut (54),
the tyre (10) comprising a tread layer (110) and a backing layer (112) of the tread layer (110), the backing layer (112) being arranged radially inside the tread layer (110),
**characterized in that** the tread (14) comprises so-called hybrid transverse cuts (77, 78) made at least partially in at least one of the first and second axially lateral portions (P1, P2), each hybrid transverse cut (77, 78) comprising:
- a so-called narrow axially inner portion (80) having, at the bottom (94) of the cut, a width (Lai) ranging from 0.2 mm to 0.6 mm, the narrow axially inner portion (80) being the axially innermost portion of the hybrid transverse cut (77, 78) in the at least one of the first and second axially lateral portions (P1, P2),
- a so-called wide axially outer portion (82) having, at the bottom (94) of the cut, a width (Lae) ranging from 0.7 mm to 5.0 mm, communicating with the narrow axially inner portion (80), arranged axially outside the narrow axially inner portion (80), the wide axially outer portion (82) being the axially outermost portion of the hybrid transverse cut (77, 78) in the at least one of the first and second axially lateral portions (P1, P2),
**in that** each hybrid transverse cut (77, 78) has a hybrid transverse cut bottom (94), the entire bottom (94) of each hybrid transverse cut (77, 78) being arranged radially outside an interface (114) between the tread layer (110) and the backing layer (112),
**and in that** at least part (126) of the bottom (94) of the narrow axially inner portion (80) is arranged at a radial distance (di) from the interface (114) strictly greater than the radial distance (de) at which at least part (128) of the bottom (94) of the wide axially outer portion (82) is arranged.

2. Tyre (10) according to the preceding claim, wherein at least 60%, preferably at least 75% of the curvilinear length (Loi) of the narrow axially inner portion (80) is arranged at a radial distance (di) from the interface (114) strictly greater than a mean radial distance (dem) at which the bottom (94) of the wide axially outer portion (82) is arranged.

3. Tyre (10) according to any one of the preceding claims, wherein the bottom (94) of the narrow axially inner portion (80) is arranged at a mean radial distance (dim) from the interface (114) strictly greater than the mean radial distance (dem) at which the bottom (94) of the wide axially outer portion (82) is arranged.

4. Tyre (10) according to any one of the preceding claims, wherein at least part (122) of the portion of the interface (114) arranged radially in line with the narrow axially inner portion (80) is arranged radially outside at least part (124) of the portion of the interface (114) arranged radially in line with the wide axially inner portion (82).

5. Tyre (10) according to any one of the preceding claims, wherein the tread (14) comprises hybrid transverse cuts (77, 78) partially made in each first and second axially lateral portion (P1, P2).

6. Tyre (10) according to any one of the preceding claims, wherein at least 50%, preferably at least 75% and more preferably at least 90% of the transverse cuts at least partially made in at least one of the first and second axially lateral portions (P1, P2), preferably at least partially made in each first and second axially lateral portion (P1, P2), are hybrid transverse cuts (77, 78).

7. Tyre (10) according to any one of the preceding claims, wherein the narrow axially inner portion (80) has a curvilinear length (Loi) at least equal to 20% and at most equal to 75% of the curvilinear length (Lot) of the part of each hybrid transverse cut (77, 78) made in the at least one of the first and second axially lateral portions (P1, P2).

8. Tyre (10) according to any one of the preceding claims, wherein the width (Lai) of the narrow axially inner portion (80) at the bottom (94) of the cut ranges from 0.2 mm to 0.5 mm.

9. Tyre (10) according to any one of the preceding claims, wherein the width (Lae) of the wide axially outer portion (82) at the bottom (94) of the cut ranges from 1.0 mm to 5.0 mm, preferably from 2.0 mm to 4.5 mm.

10. Tyre (10) according to any one of the preceding claims, wherein each hybrid transverse cut (77, 78) comprises:
- a so-called inclined axially inner portion (100) made in at least one of the first and second axially lateral portions (P1, P2) and forming a mean angle (A) with the axial direction (Y) greater than or equal to 15°, preferably greater than or equal to 20°, the inclined axially inner portion (100) being the axially innermost portion of the hybrid transverse cut (77, 78) in the at least one of the first and second axially lateral portions (P1, P2),
- a so-called straight axially outer portion (102) made in at least one of the first and second axially lateral portions (P1, P2) and forming a mean angle (B) with the axial direction (Y) strictly less than the mean angle (A) of the inclined axially inner portion (100) and arranged axially outside the inclined axially inner portion (100), the straight axially outer portion (102) being the axially outermost portion of the hybrid transverse cut (77, 78) in the at least one of the first and second axially lateral portions (P1, P2).

11. Tyre (10) according to the preceding claim, wherein the mean angle (B) of the straight axially outer portion is strictly less than 25°, preferably less than or equal to 20° and more preferably less than or equal to 15°.

12. Tyre (10) according to Claim 10 or 11, wherein:
- the narrow axially inner portion (80) comprises at least part of the inclined axially inner portion (100), and
- the wide axially outer portion (82) comprises at least part of the straight axially outer portion (102).

13. Tyre (10) according to any one of the preceding claims, wherein the narrow axially inner portion (80) emerges into one of the first and second axially outer main circumferential cuts (52, 54) adjacent to it.

14. Tyre (10) according to any one of the preceding claims, wherein each hybrid transverse cut (77, 78) comprises an axially terminal portion (83) made axially outside the at least one of the first and second axially lateral portions (P1, P2) and communicating with the wide axially outer portion (82).
